# EUROPEAN PATENT SPECIFICATION

(11) **EP 1 478 198 B1**
(45) Date of publication and mention of the grant of the patent: **22.03.2006**
(21) Application number: 03010598.5
(22) Date of filing: 12.05.2003
(51) Int. Cl.: H04Q 7/38

(54) **Method and apparatus for performing inter-frequency measurements**
Verfahren und Vorrichtung zur Durchfürung von Interfrequenz-Messungen
Procédé et dispositif pour effectuer des mesures d'inter-fréquence

(43) Date of publication of application: 17.11.2004
(73) Proprietor: MATSUSHITA ELECTRIC INDUSTRIAL CO., LTD., Kadoma-city, Osaka 571-8501 (JP)
(72) Inventor: Petrovic, Dragan, 64295 Darmstadt (DE); Seidel, Eiko, 64285 Darmstadt (DE); von Elbwart, Alexander Golitschek Edler, 64285 Darmstadt (DE); Suzuki, Hidetoshi, Yokosuka-shi, Kanagawa 239-0847 (JP)
(74) Representative: Grünecker, Kinkeldey, Stockmair & Schwanhäusser Anwaltssozietät

(56) References cited:
- WO-A-01/65855
- US-B1- 6 212 368
- US-B1- 6 459 689

## Description

The present invention relates to a communication method, a mobile terminal and a communication system performing inter-frequency measurements while participating in a scalable data service.

The Third Generation Partnership Project (3GPP) specification group has defined the Universal Mobile Telecommunication Standard (UMTS) in recent years. Release 5 of March 2002 introduced advanced features such as a multi-rate wideband voice codec, IP-based multimedia services (IMS) and high speed downlink packet access (HSDPA).

The UMTS network architecture defines a core network (CN) and a terrestrial radio access network (UTRAN). The UTRAN has been designed to efficiently handle voice and data as well as real-time and non-real-time services over the same air interface, i.e. same carrier. Several radio interface modes have been defined in this framework. Essentially, the definition distinguishes between two modes of operation: frequency division duplex (UTRAN FDD) for operation in paired frequency bands and time division duplex (UTRAN TDD) for operation in unpaired frequency bands, allowing alternative chip rates and bandwidths to be implemented.

For example, the UTRAN FDD mode employs Wideband CDMA (W-CDMA) as an access technology. W-CDMA uses direct sequence CDMA and allows bit rates up to 384 kbit/s (2.048 Mbit/s in a pico cell). These high data rates on the wireless link facilitate the introduction of scalable multimedia services to UMTS. In this respect point-to-multipoint services or broadcast services are of interest especially in the field of video and audio streaming.

Point-to-multipoint services allow data from a single source entity to be transmitted to multiple endpoints. These services are expected to be used extensively over wireless networks and therefore public land mobile networks (PLMN) should to efficiently support them. In this respect, Multimedia Multicast / Broadcast Service (MBMS) is intended provide this capability for such broadcast/multicast services provided by the home environment and other value added service providers (VASP).

The MBMS is an unidirectional point-to-multipoint bearer service in which data is transmitted from a single source entity to multiple recipients. It is anticipated that other services will use these bearer capabilities. The 3GPP has defined two modes of operation for MBMS: the broadcast mode and the multicast mode. The main motivation for providing services in terms of multicast / broadcast transmissions is the efficient utilization of radio resources when transmitting the same content to several users simultaneously.

The multicast/broadcast mode is a unidirectional point-to-multipoint transmission of multimedia data (e.g. text, audio, picture, video) from a single source entity to all users in a multicast/broadcast service area. The multicast/broadcast mode is intended to efficiently use radio/network resources e.g. data is transmitted over a single logical channel. Data is transmitted in the multicast/broadcast service area as defined by the network (Home environment). In the multicast mode the network may selectively transmit to cells within the multicast service area which contain members of a multicast group.

MBMS data transmission adapts to different radio access network (RAN) capabilities or different radio resource availability, e.g. by reducing the bitrate of the MBMS data. The selection and description of an appropriate mechanism is subject to MBMS stage 2.

The transmission of MBMS data is carried out on point-to-multipoint logical channel MTCH (MBMS Traffic Channel) while the transmission of MBMS control information is carried out on point-to-multipoint logical channel MCCH (MBMS Control Channel). If the only information to be transmitted on MBMS Control Channel is related to notifications, this channel could be called NCCH (Notification Control Channel). Depending on certain criteria (e.g. system load), these logical channels may be mapped on dedicated transport channels (DCH - Dedicated Channel) or common transport channels (e.g. FACH -

Forward Access Channel).

Scalable data services, such as scalable MBMS, are based upon the assumption that the data to be transmitted can be separated into distinct layer data streams, also referred to as importance layers. Practically, those are categorized into a Base Layer and one or more Enhanced Layers. By definition, the Base Layer contains data that is required for the service (e.g. video streaming) to be received with a lowest acceptable quality and provides a basic quality of service of the MBMS data stream. The Enhanced Layer(s) contain(s) only supplementary data whose reception and subsequent processing improve the quality of service experienced by end users relative to the quality offered by the Base Layer.

In a radio network e.g. UMTS UTRAN, a service in the cell can be provided on several frequency carriers. These new cells, separated by different frequencies, usually have the same coverage and form a multi layered geographically collocated cell structure. Inter-frequency handovers, i.e. an inter-frequency cell changes are executed for the purpose of balancing the load between frequency carriers and is therefore possible to have a number of users on each frequency carrier. Inter-frequency handovers are controlled by RRC (Radio Resource Control) entities which are located in a radio network controller (RNC).

An inter-frequency cell change can be executed with or without inter-frequency measurements carried out by user equipment (UE) or mobile terminal. In the former case, the network first orders to UE to perform inter-frequency measurements. Finally the radio access network (RAN) makes decision whether to execute an inter-frequency handover or not based on measurement results or the decision is left to the UE.

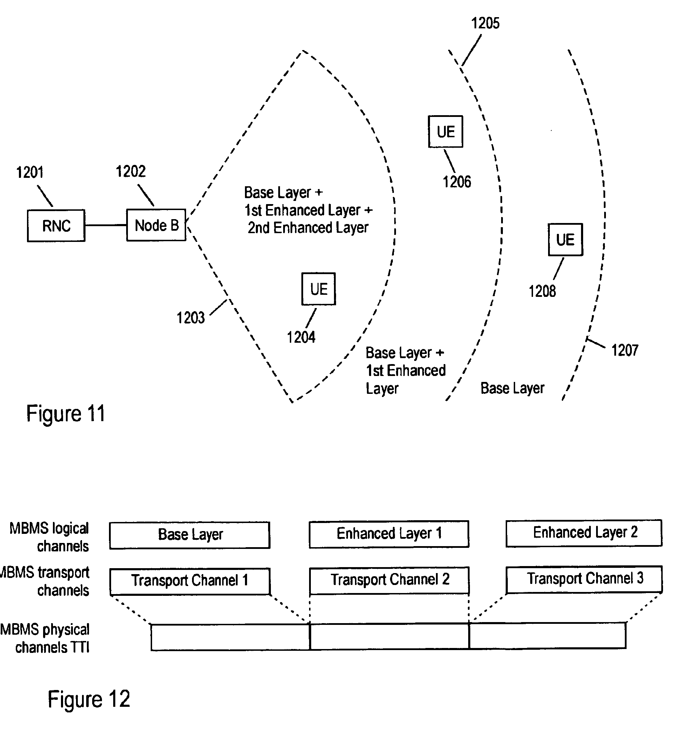

In Tdoc R2-022110 "Power Usage for MBMS" by Lucent Technologies (available from 3GPP), it has been shown that 66% of the sector total power has to be allocated to a single 64kbps MBMS if full cell coverage is required for data transmissions on a common transport channel, such as a FACH. An example of usage of scalable MBMS transmissions would be to relax the power requirements by transmitting only the Base Layer of the importance layers to those users which are located close to the cell edge and gradually increase the number of enhanced layers for users located closer to the radio access network's Node B transmitting the data. This technique is illustrated in Figure 11.

So far the scalability in MBMS has not been discussed in relevant standardization bodies of the 3GPP and it is not clear if it should be supported in the RAN. In further considerations it will be assumed that adequate knowledge to support scalable MBMS transmissions is available in the RAN. If scalability is supported in RAN, there could be more than one logical channel (MTCH) supporting transmissions of different importance layers. MBMS-specific function for handling of logical channels is currently located in medium access control MAC c/sh/m entity in RNC.

Compressed mode measurements (see for example 3GPP TS 25.215: "Physical layer - Measurements (FDD)" for more details) are usually executed when making measurements on other transmission frequencies in a CDMA system without a full dual receiver terminal. This mode can be considered as an example of how transmitted bits can be manipulated to enable a UE to carry out measurements without imposing significant additional requirements on the processing time.

The term "compressed mode" means that transmission and reception at the UE are halted for short time intervals in order to perform measurements on the other frequencies. In these intervals, gaps within frames received by the UE are introduced by the RAN to allow the UE to perform the measurements. Transmission gaps are created by compressing the data that should be transmitted in the time domain, i.e. within a time frame.

There are three ways of frame compression: First, increasing the available data rate by reducing the spreading factor. The decrease of spreading factor is often compensated by increasing transmission power in the frame. Second, reducing the data rate by puncturing on physical layer. Since puncturing processes some practical limits, this is limited to creating rather short transmission gaps. And third, lowering the data rate delivered to physical layer by the scheduling in higher layer.

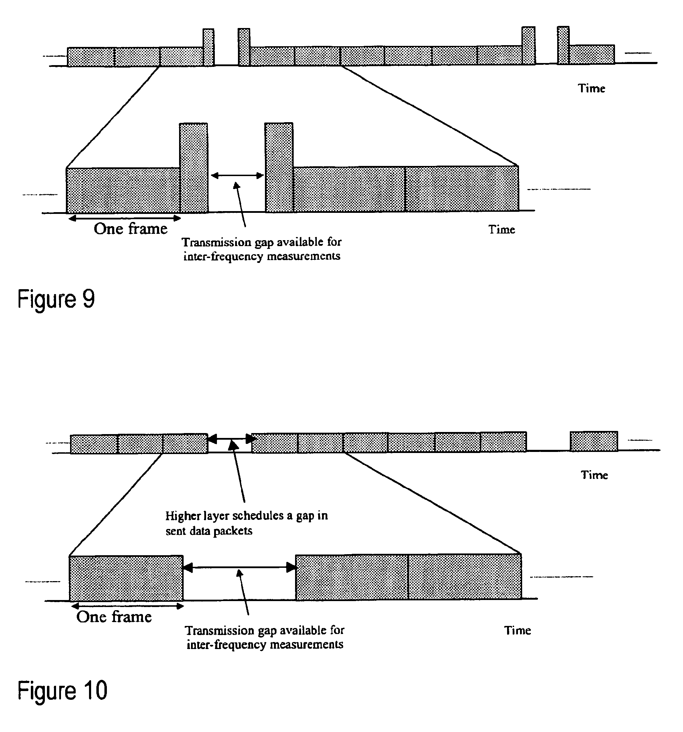

Figure 9 shows the transmission of a physical channel on the frame level in the compressed measurement mode where the decrease of the spreading factor is compensated by increasing the transmission power in the frame. Figure 10 illustrates the transmission of a physical channel on the frame level in the compressed mode where transmission gaps are realized by higher layer scheduling.

On command from the UTRAN, a UE monitors cells on other frequencies and cells on other modes and radio access technologies that are supported by the UE. To allow the UE to perform inter-frequency measurements, the UTRAN instructs the UE to enters into "compressed mode" for inter-frequency measurements.

MBMS supports the mobility between the cells controlled by different base stations (Node Bs). If there is more than one W-CDMA carrier per base station, these are usually used for balancing load or improving coverage. It is clear that MBMS content does not have to be transmitted on the same carriers in geographically neighboring cells. Due to mobility of users between cells controlled by different Node Bs, it may happen that there are sets of users belonging to the same MBMS group but receiving MBMS contents through different frequency carriers. For the sake of radio efficiency, it is therefore desirable to transmit MBMS content on a single W-CDMA carrier. Thus, the RAN may wish to move all users belonging to a same MBMS group to a single frequency carrier.

For this decision to be more accurate, a mechanism for inter-frequency measurements is needed.

US 6,212,368 relates to a diversity and inter-frequency mobile-assisted handoff of a communication terminal within an IS-95 mobile communication system. By ceasing the reception of a signal, several transmitted bits (or chips) are not received. The method proposed by this document relies on the use of low bit rate coding in order to not severely decrease the Quality of Service due to not receiving parts of the signal on the physical layer.

WO 01/65855 A2 relates to a system and method for streaming scalable video data over a variable-bandwidth packet-base network. The method suggests that the number of bits or sub-layers is chosen to be transmitted for each enhancement layer frame. Further, these bits or sub-layers are also partitioned over multiple packets if being sent over a packet-based network.

The document "SECURE SCALABLE VIDEO STREAMING FOR WIRELESS NETWORKS" (Susie J. Wee and John G. Apostolopoulos; IEEE International Conference on Acoustics, Speech and Signal Processing. Salt Lake City, Utah, May 2001) relates to a method for streaming video data, encoded in scalable packets, to heterogeneous clients. Some of the received packets are truncated or eliminated in the receiver to match the capability and quality level desired by the target client.

The object of the present invention is to save processing time at the mobile terminal in order to perform inter-frequency measurements.

The object of the invention is solved by the independent claims. Further embodiments are subject matter to their dependent claims.

The present invention provides a communication method in a wireless system comprising a radio access network and a plurality of mobile terminals. A mobile terminal of the system receives data of a scalable data service from the radio access network, wherein the received data comprises a plurality of importance layers, further receives a notification from the radio access network to perform inter-frequency measurements, and processes by a subset of the importance layers of the received transmission data to reduce the processing load at the terminal for inter-frequency measurements.

In an embodiment of the invention the subset of the importance layers is demultiplexed from the physical channels. By only demultiplexing the data from the physical channels that should be further processed at the lowest layer the amount of data to be processed can be significantly decreased, which saves processing time that may be used for inter-frequency measurements.

The method described above may be applied to data of the scalable data service received via a common transport channel or a dedicated transport channel in another embodiment. This embodiment relates to broadcast transmissions that usually use common transport channels for transmission. As the data on the common transport channel may be received by a plurality of mobile terminals, it is more effective to reduce the data rate in the mobile terminal for enabling inter-frequency measurements. This is because a reduction of the data rate by scheduling at the radio access network would decrease the quality of service of the transmitted scalable service data for all mobile terminals receiving the data stream.

Further, the mobile terminal performs inter-frequency measurements in the time gained by processing only a subset of the importance layers of the transmission data, and transmits indicators derived from the inter-frequency measurement results to the radio access network.

In case the radio access network decides to move the mobile terminal to another carrier frequency to more effectively utilize the system resources, the mobile terminal receives from the radio access network an instruction to change the carrier frequency for data of the scalable data service, and changes the carrier frequency for data of the scalable data service to the instructed frequency.

A non access stratum in the wireless network may be notified about the selective processing of the subset of importance layers using indication primitives. For the definitions of indication primitives it is referred to the document 3GPP TS 25.301 "Radio Interface Protocol Architecture".. This may be desirable, if the delivery of the scalable service is charged based on the quality of service provided to the mobile terminal.

The notification from the radio access network to perform inter-frequency measurements may be received on a MBMS control channel or a notification control channel.

The scalable data services may be a multimedia broadcast/multicast service (MBMS). Further, the scalable data service may comprise multicast and/or broadcast data transmissions.

Further, the present invention provides a mobile terminal in a wireless system comprising a radio access network and at least the mobile terminal. The mobile terminal comprises receiving means for receiving data of a scalable data service from the radio access network, wherein the received data comprises a plurality of importance layers. Further, the receiving means is adapted to receive a notification from the radio access network to perform inter-frequency measurements.

The terminal may further include processing means for reducing the time to process the transmission data of the scalable data service, wherein the processing means is adapted to process a subset of the importance layers of the received transmission data.

Further the mobile terminal may comprise demultiplexing means for demultiplexing the subset of the importance layers from the physical channel.

In another embodiment of the invention, the receiving means is adapted to receive the data of the scalable data service via a common transport channel.

The mobile terminal may further comprise measurement means for performing inter-frequency measurements in the time gained by only processing a subset of the importance layers of the received transmission data, and transmission means for transmitting inter-frequency measurement results to the radio access network.

In order to enable the assignment of a new carrier frequency to the terminal, the receiving means of the mobile terminal may be adapted to receive an instruction from the radio access network to change the carrier frequency for data of the scalable data service, and the transmission means is adapted to change the carrier frequency for data of the scalable data service to the instructed frequency.

As scalable data services such as MBMS are commonly charged based on the received quality of service, it may be desirable that the mobile terminal may further comprise notification means for notifying a non access stratum in the wireless network about the selective processing of the subset of importance layers. This enables the mobile terminal to notify a non access stratum, which may include a charging entity, about the fact that it receives a lower quality of service when performing inter-frequency measurements, which may considered when charging the user for the scalable data service.

In another embodiment, the receiving means is adapted to receive the notification from the radio access network to perform inter-frequency measurements a control channel of the scalable data service or a notification control channel.

Moreover, the present invention relates to a communication system comprising at least one mobile terminal according as described above and a radio access network for providing a transmission data of a scalable data service to the at least one mobile terminal.

In the following the present invention is described in more detail in reference to the attached figures and drawings showing advantageous embodiments of the invention. Similar or corresponding details in the figures are marked with the same reference numerals.
- **Figure 1**: shows a radio access network, wherein a mobile terminal joins a multicast group,
- **Figure 2**: shows the radio access network, wherein scalable service data are provided from the core network to the mobile terminal via the radio access network,
- **Figure 3**: shows the radio access network, wherein the mobile terminal joins a new cell and receives the scalable service data from the core network,
- **Figure 4**: shows the radio access network, wherein the mobile terminal performs inter-frequency measurements after joining a new cell of the radio access network,
- **Figure 5**: shows the radio access network, wherein the mobile terminal performs inter-frequency measurements and reports on a decreased quality of service of the scalable data service to a charging entity in the radio access network,
- **Figure 6**: shows the radio access network, wherein the mobile terminal reports the measurement results to the radio access network,
- **Figure 7**: shows the radio access network assigning a new transmission frequency to the mobile terminal for the reception of the scalable service data, and
- **Figure 8**: shows the radio access network, wherein the mobile terminal receives the scalable service data at the assigned reception frequency.
- **Figure 9**: shows a compressed mode data transmission by reducing the spreading factor, and
- **Figure 10**: shows a compressed mode data transmission by higher layer scheduling.
- **Figure 11**: shows an example of a scalable MBMS transmission, and
- **Figure 12**: shows the multiplexing of importance layers of the transmission data on physical channels, and
- **Figure 13**: shows MAC c/sh/m structure at the mobile terminal.

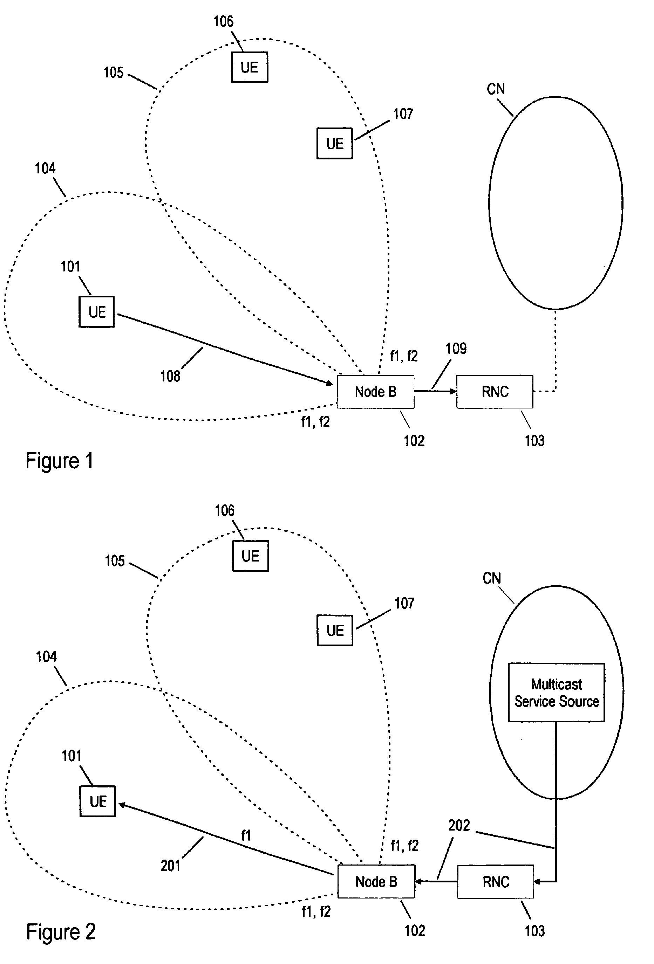

Figures 1 through Figure 9 are intended to exemplify a scenario for an inter-frequency cell change of a mobile terminal (UE 101).

Figure 1 shows a radio access network (RAN) comprising a Node B 102 and a radio network controller (RNC) 103. Though the figures show that the source cell 104 and target cell 105 are under control of the same Node B 102, it pointed out that the cells may be also controlled by two different Node Bs . In the example of an inter-frequency cell change of UE 101 as shown in the figures, it is should be noted that the carrier frequency in the source cell 104 (source frequency) and the carrier frequency in the target cell 105 (target frequency) play a major role and not the entity controlling the cells.

In general, RNC 103 may implement the medium access control (MAC) entity, the radio link control (RLC) entity, radio resource control (RRC) entity, broadcast/multicast control (BMC) entity and the packet data convergence protocol (PDCP) in the RAN. The RRC of the RNC is responsible for handovers between different carrier frequencies.

The RNC 103 may be further connected to the core network CN. In this illustrative example it is further assumed that in each cell 104, 105 of the Node B 102 the two W-CDMA carrier frequencies f1 and f2 are employed for transmission. It is clear that other access schemes may be also employed.

The user equipments 101, 106, 107 in source cell 104 and target cell 105 participate in a scalable data service, such as scalable MBMS. Transmissions of the service data may be performed on a point-to-point basis for multicast transmissions using a dedicated transport channel or on a point-to-multipoint basis for broadcast transmissions using a common transport channel.

The UEs 106 and 107 reside in target cell 105 and receive scalable service data (MBMS data) at carrier frequency f2. The RNC 103 of the RAN may announce the services, e.g. broadcast services available at the source cell 104 and target cell 105 on a known common channel, e.g. the MCCH or NCCH. The announcements may inform the UEs 101, 106, 107 about the available services and their carrier frequencies. It is also possible that the same service is delivered within the same cell at two different carrier frequencies, which significantly reduces the available radio resources.

After receiving the announcements from the RAN, the UE 101 receives the transmission data of the scalable data service, i.e. the broadcast service from a sending source. The sending source may be located within the core network CN as illustrated in Figure 2 or in a PLMN to which the core network CN may be further attached.

Figure 2 illustrates the data delivery of the broadcast service (201, 202) to the UE 101. As indicated, the RAN employs the carrier frequency f1 for transmitting the transmission data from the Node B 102 to the UE 101.

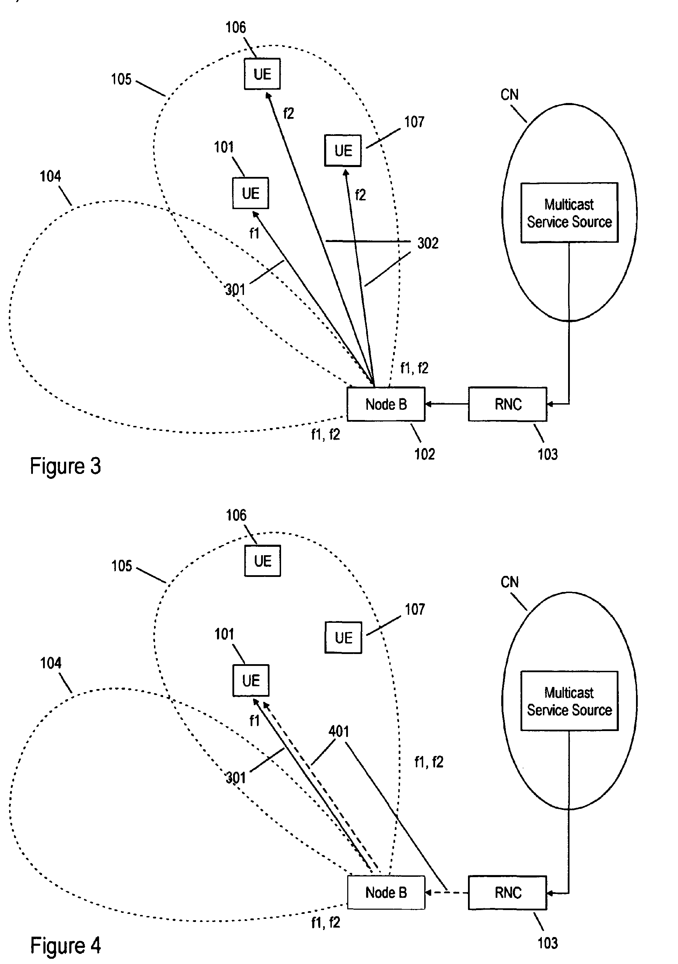

In Figure 3, UE 101 has moved from the source cell 104 to the target cell 105, i.e. a handover has been performed. After moving from source cell 104 to target cell 105, the UE 101 still receives (301) the broadcast data at the carrier frequency f1.

The other UEs 106 and 107 located in the target cell 105, which have also subscribed to the broadcast service of UE 101, receive the transmission data of the broadcast service at carrier frequency f2.

As suggested above, the RNC 103 may inform UE 101 about the structure of scalable data transmissions and announces available scalable MBMS services available in the target cell 105 via the MCCH or NCCH or another control channel. Further, the UE 101 may be notified by the RNC 103 about the type of channels used for delivering MBMS or scalable services within target cell 105. Common traffic channels may be used for broadcast transmissions and dedicated channels or common traffic channels may be used for multicast transmissions.

As mentioned earlier, the transmission of scalable service data as MBMS service data consumes most of the sector's total available transmission power on a carrier frequency. However, UEs 101, 106, 107 receiving the same MBMS service do not necessarily use the same carrier frequency within a cell, as illustrated in Figure 3. Hence, the RAN may wish to move all UEs 101, 106, 107 to a single carrier frequency.

Figure 4 shows the radio access network transmitting a notification to the mobile terminal 101 in order to instruct the UE 101 to perform inter-frequency measurements after joining the target 105 cell of the radio access network. Based on the results of these measurements, the RAN will decide whether the UE 101 should be moved to carrier frequency f2 for a further reception of the broadcast service. The RNC 103 may send (401) a notification message via Node B 102 to the UE 101. This message instructs the mobile terminal 101 to perform inter-frequency measurement.

The measurement relies on the quantities obtained from observing the common pilot channel (CPICH). So far, three types of quantities have been defined for the measurement procedure (see, e.g. 3GPP TS 25.215, "Physical Layer - Measurements (FDD)"):
- Received Signal Code Power (RSCP), which is the received power on one code after dispreading, defined on the pilot symbols.
- Received Signal Strength Indicator (RSSI), which is the wideband received power within the channel bandwidth.
- Ec/No, defined as the received signal code power divided by the total received power in the channel bandwidth, i.e. RSCP/RSSI.

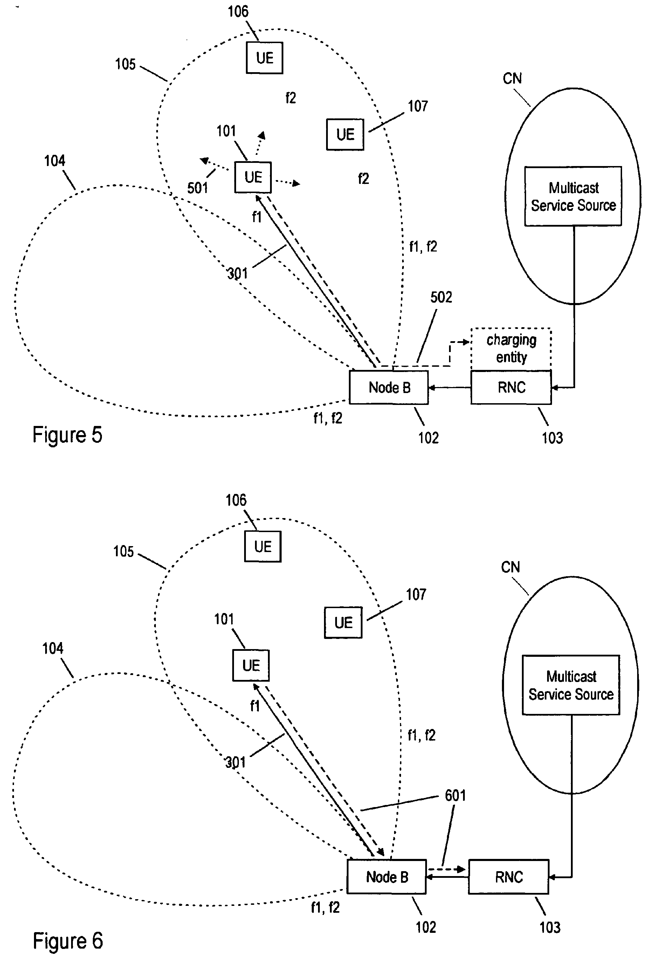

Referring now to Figure 5, the UE 101 may now perform inter-frequency measurements 501. In order to relieve the processing load on the UE 101 for performing the measurements, the UE 101 selectively processes only a subset of the importance layer of received broadcast service data.

Figure 12 illustrates how the different layers of the transmission data are mapped to the physical channel at the RAN. For broadcast transmissions of a scalable service a base layer and one or more enhanced layers may be multiplexed onto the physical channels such that there are usually no time gaps in the transmission format that could be used by the UE 101 for inter-frequency measurements.

Therefore, the UE 101 only processes a subset of the received importance layers to save processing time that can be used for the measurements. For example, the UE 101 may not process the enhanced layers of the broadcast data stream received but only the base layer. This would provide a processing free time corresponding to the frame lengths of the enhanced layers, which could be used for the inter-frequency measurements.

In another embodiment of the present invention the selection of the importance layers to be processed is made in at the demultiplexing level in the UE 101. The UE 101 only demultiplexes the importance layers that will be further processed from the data stream received on the physical channels. The data of importance layers, in this case enhanced layers, that are not processed may be deleted at the UE 101.

The saving of processing time is achieved at the expense of decreased quality of service. For the purposes of charging, etc. it may be desirable that UE 101 notifies Non Access Stratum - serving as a charging entity - of the system when selectively processing importance layers of the broadcast stream during inter-frequency measurements. E.g. a primitive such as a MBMS Measurements Indication may be transmitted from an entity responsible for scalable MBMS transmissions, e.g. MAC c/sh/m entity on the UE side to RRC or higher layer of the RAN for this purpose.

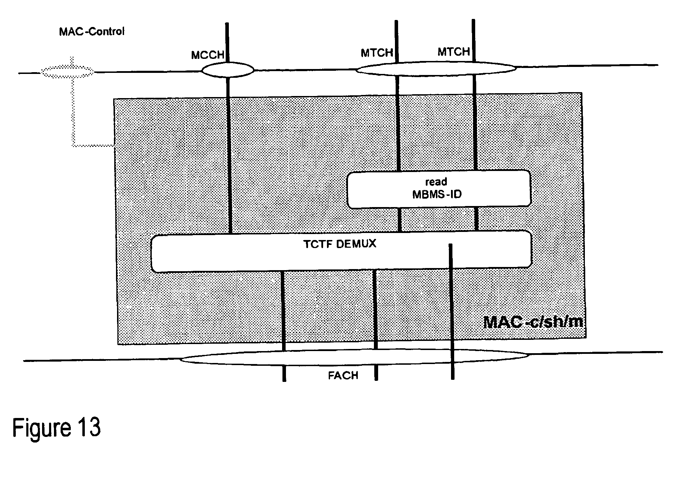

An exemplary architecture of MAC c/sh/m entity is shown in the Figure 13. It is assumed that MBMS contents is transmitted over MBMS common transport channel FACH. Said indication primitive can be transferred through MAC Control service access point to higher layers. The primitive may contain information useful to evaluate relative decrease in received QoS (e.g. number of omitted enhanced layers etc.). Users belonging to one MBMS group are identified by an MBMS identifier (ID). The block TCTF DEMUX may be applicable if the transport channels are multiplexed.

When the UE 101 has finished the inter-frequency measurements, it may report 601 the results to the RAN as illustrated in Figure 6. The UE 101 may inform the RAN about the measurement results directly, by sending the results themselves or may use special indicators which inform the RAN about whether certain quality criteria are fulfilled or not. When being reported the measurement results, the RAN may then decide whether certain quality criteria are fulfilled which allow the RAN to move the UE 101 to another carrier frequency for receiving the multicast data.

In case indicators for reporting the inter-frequency measurement results are used by UE 101, the RAN may decide directly from the signaled information on whether to initiate a cell change of the UE 101. The quality criteria are based on the inter-frequency measurements carried out by the UE 101, i.e. the measurement result values as outlined above.

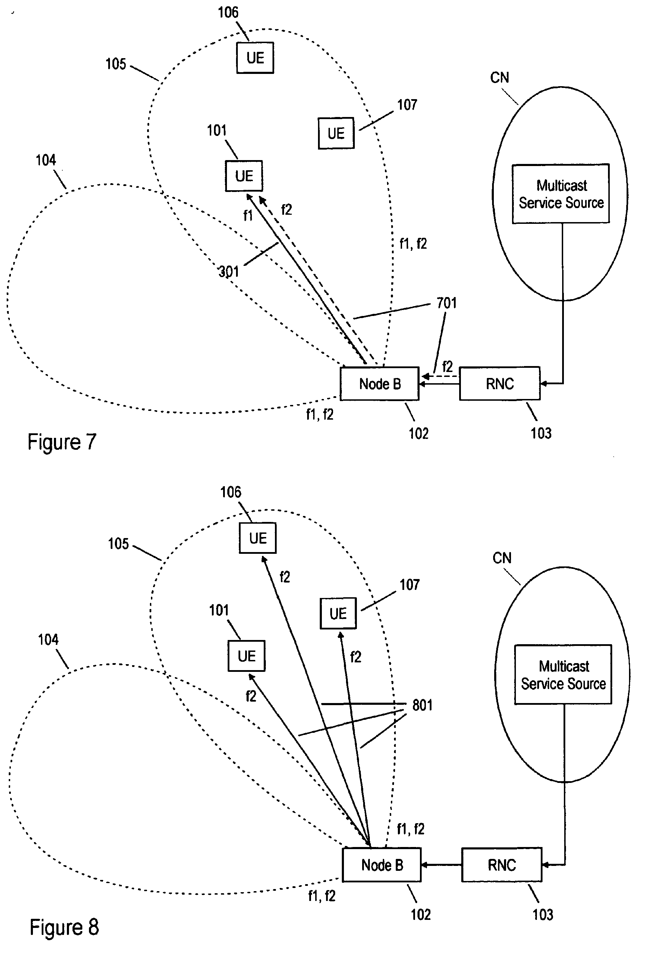

If the quality criteria are fulfilled and the RNC 103 decides to move UE 101 to another carrier frequency for the reception/transmission of multicast data, the RNC 103 informs the UE 101 to switch 701 to the new carrier frequency f2. This process is illustrated in Figure 7.

Finally, as shown in Figure 8, the UE 101 receives the scalable service data at the new carrier frequency f2, which is used by all UEs in the target cell 105 to receive the multicast service. Hence, by the communication method described above, the present invention allows the RAN to move all UE 101, 106, 107 that receive a scalable data service to a single carrier frequency 102. Therefore, the radio link efficiency can be significantly increased within a cell, as the available transmission power within a cell has not to be used for the transmission of scalable data services.

The basic principles of inter-frequency measurements for scalable MBMS have been explained in this report relying on general MBMS principles. It should be clear to those skilled in the art that the exposed principles can be applied in a straightforward manner to different architectures and channels of MBMS or other services allowing a scalable transmission of their service data.

The transmission format in this description is especially suited for time multiplexing of importance layers on WCDMA radio interface. It should be clear to those skilled in the art that the idea is generally applicable to different types of multiplexing, e.g. code multiplexing for WCDMA radio interface or sub-carrier-wise multiplexing for OFDM radio interface.

## Claims

1. A communication method in a wireless system comprising a radio access network and a plurality of mobile terminals (101, 106) the method comprising the following steps performed by a mobile terminal (101):
receiving a notification (401) from the radio access network to perform inter-frequency measurements,
the method further comprising the following steps performed by said mobile terminal:
receiving data of a scalable data service from the radio access network, wherein the received data comprises a plurality of distinct layer data streams,
processing a subset of the distinct layer data streams of the received transmission data and
performing inter-frequency measurements in the time gained by processing the subset of distinct layer data streams.

2. The communication method according to claim 1, **characterized in that** processing the subset of the distinct layer data streams comprises demultiplexing the subset of the distinct layer data streams from the physical channel.

3. The communication method according to claim 1 or 2, **characterized in that** the data of the scalable data service is received via a common or dedicated transport channel.

4. The communication method according to one of claims 1 to 3, **characterized by** further comprising the step of transmitting indicators derived from the inter-frequency measurement results to the radio access network.

5. The communication method according to one of claims 1 to 4, **characterized by** further comprising the steps of:
receiving from the radio access network an instruction to change the carrier frequency for data of the scalable data service, and
changing the carrier frequency for data of the scalable data service to the instructed frequency.

6. The communication method according to one of claims 1 to 5, **characterized by** further comprising the step of notifying a non access stratum in the wireless network about the processing of the subset of distinct layer data streams by means of an indication primitive.

7. The communication method according to one of claims 1 to 6, **characterized in that** the notification from the radio access network to perform inter-frequency measurements is received on a MBMS control channel or a notification control channel.

8. The communication method according to one of claims 1 to 7, **characterized in that** the scalable data service is a multimedia broadcast/multicast service MBMS.

9. The communication method according to one of claims 1 to 8, **characterized in that** the scalable data service comprises multicast and/or broadcast data transmissions.

10. A mobile terminal (101) a wireless system comprising a radio access network and at least the mobile terminal (101) the mobile terminal comprising:
receiving means for receiving a notification (401) from the radio access network to perform inter-frequency measurements,
the receiving means are adapted to receive data of a scalable data service from the radio access network, wherein the received data comprises a plurality of distinct layer data streams, and
by further comprising processing means for processing a subset of the distinct layer data streams of the received transmission data and
inter-frequency measurement means for performing inter-frequency measurements in the time gained by processing the subset of distinct layer data streams.

11. The mobile terminal according to claim 10, **characterized by** comprising demultiplexing means for demultiplexing the subset of the distinct layer data streams from the physical channel.

12. The mobile terminal according to claim 10 or 11, **characterized in that** the receiving means is adapted to receive the data of the scalable data service via a common transport channel.

13. The mobile terminal according to one of claims 10 to 12, **characterized by** further comprising transmission means for transmitting indicators derived from the inter-frequency measurement results to the radio access network.

14. The mobile terminal according to one of claims 10 to 13, **characterized in that** the receiving means is adapted to receive an instruction from the radio access network to change the carrier frequency for data of the scalable data service, and
the transmission means is adapted to change the carrier frequency for data of the scalable data service to the instructed frequency.

15. The mobile terminal according to one of claims 10 to 14, **characterized by** comprising notification means for notifying a non access stratum in the wireless network about the processing of the subset of distinct layer data streams.

16. The mobile terminal according to one of claims 10 to 15, **characterized in that** the receiving means is adapted to receive the notification via MBMS control channel or a notification control channel from the radio access network to perform inter-frequency measurements.

17. The mobile terminal according to one of claims 10 to 16, **characterized in that** the scalable service is a multimedia broadcast/multicast service MBMS.

18. A communication system comprising at least one mobile terminal according to one of claims 10 to 17 and a radio access network for providing a transmission data of a scalable data service to the at least one mobile terminal.

## Patentansprüche

1. Kommunikationsverfahren in einem Drahtlossystem, das ein Funkzugangsnetz und eine Vielzahl von Mobil-Endgeräten (101, 106) umfasst, wobei das Verfahren die folgenden Schritte umfasst, die von einem Mobil-Endgerät (101) durchgeführt werden:
Empfangen einer Benachrichtigung (401) von dem Funkzugangsnetz, Frequenz-Messungen durchzuführen,
wobei das Verfahren des Weiteren die folgenden Schritte umfasst, die von dem Mobil-Endgerät durchgeführt werden:
Empfangen von Daten eines skalierbaren Datendienstes von dem Funkzugangsnetz, wobei die empfangenen Daten eine Vielzahl von Datenströmen separater Schichten umfassen,
Verarbeiten einer Teilgruppe der Datenströme separater Schichten der empfangenen Sendedaten, und
Durchführen von Interfrequenz-Messungen in der Zeit, die durch Verarbeitung der Teilgruppe von Datenströmen separater Schichten gewonnen wird.

2. Kommunikationsverfahren nach Anspruch 1, **dadurch gekennzeichnet, dass** Verarbeiten der Teilgruppe der Datenströme separater Schichten Demultiplexieren der Teilgruppe der Datenströme separater Schichten aus dem physikalischen Kanal umfasst.

3. Kommunikationsverfahren nach Anspruch 1 oder 2, **dadurch gekennzeichnet, dass** die Daten des skalierbaren Datendienstes über einen gemeinsam genutzten oder einen zugewiesenen Transportkanal empfangen werden.

4. Kommunikationsverfahren nach einem der Ansprüche 1 bis 3, **dadurch gekennzeichnet, dass** es des Weiteren den Schritt des Sendens von Anzeigen, die aus den Interfrequenz-Messergebnissen hergeleitet werden, zu dem Funkzugangsnetz umfasst.

5. Kommunikationsverfahren nach einem der Ansprüche 1 bis 4, **dadurch gekennzeichnet, dass** es des Weiteren die folgenden Schritte umfasst:
Empfangen eines Befehls von dem Funkzugangsnetz, die Trägerfrequenz für Daten des skalierbaren Datendienstes zu ändern, und
Ändern der Trägerfrequenz für Daten des skalierbaren Datendienstes auf die angewiesene Frequenz.

6. Kommunikationsverfahren nach einem der Ansprüche 1 bis 5, **dadurch gekennzeichnet, dass** es des Weiteren den Schritt des Benachrichtigens einer Vermittlungsebene (non access stratum) in dem Drahtlosnetz über die Verarbeitung der Teilgruppe von Datenströmen separater Schichten mittels eines Anzeige-Primitivs umfasst.

7. Kommunikationsverfahren nach einem der Ansprüche 1 bis 6, **dadurch gekennzeichnet, dass** die Benachrichtigung von dem Funkzugangsnetz, Interfrequenz-Messungen durchzuführen, auf einem M BMS-Steuerkanal oder einem Benachrichtigungs-Steuerkanal empfangen wird.

8. Kommunikationsverfahren nach einem der Ansprüche 1 bis 7, **dadurch gekennzeichnet, dass** der skalierbare Datendienst ein Multimedia-Broadcast/Multicast-Service (MBMS) ist.

9. Kommunikationsverfahren nach einem der Ansprüche 1 bis 8, **dadurch gekennzeichnet, dass** der skalierbare Datendienst Multicast-und/oder Broadcast-Datensendungen umfasst.

10. Mobil-Endgerät (101) in einem drahtlosen System, dass ein Funkzugangsnetz und wenigstens das Mobil-Endgerät (101) umfasst, wobei das Mobil-Endgerät umfasst:
eine Empfangseinrichtung, die eine Benachrichtigung (401) von dem Funkzugangsnetz empfängt, Interfrequenz-Messungen durchzuführen.
wobei die Empfangseinrichtung so eingerichtet ist, dass sie Daten eines skalierbaren Datendienstes von dem Funkzugangsnetz empfängt, und die empfangenen Daten eine Vielzahl von Datenströmen separater Schichten umfassen, und
sie des Weiteren eine Verarbeitungseinrichtung umfasst, die eine Teilgruppe der Datenströme separater Schichten der empfangenen Sendedaten verarbeitet, und
eine Interfrequenz-Messeinrichtung, die Interfrequenz-Messungen in der Zeit durchführt, die durch Verarbeitung der Teilgruppe von Datenströmen separater Schichten gewonnen wird.

11. Mobil-Endgerät nach Anspruch 10, **dadurch gekennzeichnet, dass** es eine Demultiplexiereinrichtung umfasst, die die Teilgruppe der Datenströme separater Schichten aus dem physikalischen Kanal demultiplexiert.

12. Mobil-Endgerät nach Anspruch 10 oder 11, **dadurch gekennzeichnet, dass** die Empfangseinrichtung so eingerichtet ist, dass sie die Daten des skalierbaren Datendienstes über einen gemeinsam genutzten Transportkanal empfängt.

13. Mobil-Endgerät nach einem der Ansprüche 10 bis 12, **dadurch gekennzeichnet, dass** es des Weiteren eine Sendeeinrichtung umfasst, die Anzeigen sendet, die aus den Interfrequenz-Messergebnissen des Funkzugangsnetzes hergeleitet werden.

14. Mobil-Endgerät nach einem der Ansprüche 10 bis 13, **dadurch gekennzeichnet, dass** die Empfangseinrichtung so eingerichtet ist, dass sie eine Anweisung von dem Funkzugangsnetz empfängt, die Trägerfrequenz der Daten des skalierbaren Datendienstes zu ändern, und
die Sendeeinrichtung so eingerichtet ist, dass sie die Trägerfrequenz für Daten des skalierbaren Datendienstes auf die angewiesene Frequenz ändert.

15. Mobil-Endgerät nach einem der Ansprüche 10 bis 14, **dadurch gekennzeichnet, dass** es eine Benachrichtigungseinrichtung umfasst, die eine Vermittlungsschicht in dem Drahtlosnetz über die Verarbeitung der Teilgruppe von Datenströmen separater Schichten benachrichtigt.

16. Mobil-Endgerät nach einem der Ansprüche 10 bis 15, **dadurch gekennzeichnet, dass** die Empfangseinrichtung so eingerichtet ist, dass sie die Benachrichtigung zum Durchführen von Interfrequenz-Messungen über einen MBMS-Steuerkanal oder einen Benachrichtigungs-Steuerkanal von dem Funkzugangsnetz empfängt.

17. Mobil-Endgerät nach einem der Ansprüche 10 bis 16, **dadurch gekennzeichnet, dass** der skalierbare Dienst ein Multimedia-Broadcast/Multicast-Service (MBMS) ist.

18. Kommunikationssystem, das wenigstens ein Mobil-Endgerät nach einem der Ansprüche 10 bis 17 und ein Funkzugangsnetz zum Bereitstellen von Sendedaten eines skalierbaren Datendienstes für das wenigstens eine Mobil-Endgerät umfasst.

## Revendications

1. Procédé de communication dans un système sans fil comportant un réseau d'accès par radio et une pluralité de terminaux mobiles (101, 106), ledit procédé comprenant les étapes suivantes, effectuées par le terminal mobile (101):
recevoir une notification (401) du réseau d'accès par radio pour effectuer des mesures inter-fréquence
ledit procédé comprenant, en outre, les étapes suivantes effectuées par ledit terminal mobile :
recevoir des données d'un service de données variable du réseau d'accès par radio, ou les données reçues comportent une pluralité de couches distinctes de flux de données,
traiter un sous-ensemble des couches distinctes de flux de données des données de transmission reçues et
effectuer des mesures inter-fréquence durant le temps gagné par le traitement du sous-ensemble des couches distinctes de flux de données.

2. Procédé de communication, conformément à la revendication 1, **caractérisé par le fait que** le traitement du sous-ensemble des couches distinctes de flux de données comporte le démultiplexage du sous-ensemble des couches distinctes de flux de données à partir du canal physique.

3. Procédé de communication, conformément à la revendication 1 ou 2, **caractérisé par le fait que** les données du service de données variable sont reçues via un canal de transport commun ou dédié.

4. Procédé de communication, conformément à l'une des revendications 1 à 3, **caractérisé par le fait qu'**il comporte, en outre, l'étape de transmission d'indicateurs dérivés des résultats des mesures inter-fréquence au réseau d'accès par radio.

5. Procédé de communication, conformément à l'une des revendications 1 à 4, **caractérisé par le fait qu'**il comporte, en outre, les étapes de :
recevoir une instruction du réseau d'accès par radio pour changer la fréquence porteuse pour des données du service de données variable, et
changer la fréquence porteuse pour des données du service de données variable vers la fréquence désignée.

6. Procédé de communication, conformément à l'une des revendications 1 à 5, **caractérisé par le fait qu'**il comporte, en outre, l'étape de notification d'une strate de non accès dans le réseau sans fil concernant le traitement du sous-ensemble des couches distinctes de flux de données par le biais d'un primitif d'indication.

7. Procédé de communication, conformément à l'une des revendications 1 à 6, **caractérisé par le fait que** la notification du réseau d'accès par radio, pour effectuer les mesures inter-fréquence, est reçue sur un canal de contrôle MBMS ou sur un canal de contrôle de notification.

8. Procédé de communication, conformément à l'une des revendications 1 à 7, **caractérisé par le fait que** le service de données variable est un service multimédia radio-diffusion/multi-diffusion MBMS.

9. Procédé de communication, conformément à l'une des revendications 1 à 8, **caractérisé par le fait que** le service de données variable comporte des transmissions de données en multi-diffusions et/ou en radio-diffusion.

10. Terminal mobile (101) dans un système sans fil comporte un réseau d'accès par radio et le au moins un terminal mobile (101), le terminal mobile comprenant :
un moyen de réception pour la réception d'une notification (401) du réseau d'accès par radio pour effectuer des mesures inter-fréquence,
le moyen de réception étant adapté pour la réception de données d'un service de données variable à partir du réseau d'accès par radio, ou les données reçues comportent une pluralité de couches distinctes de flux de données, et
comportant, de surcroît, un moyen de traitement pour traiter un sous-ensemble des couches distinctes de flux de données des données de transmission reçues et
un moyen de mesures inter-fréquence pour effectuer des mesures inter-fréquence durant le temps gagné en traitant le sous-ensemble des couches distinctes de flux de données.

11. Terminal mobile, conformément à la revendication 10, **caractérisé par le fait qu'**il comporte un moyen de démultiplexage pour démultiplexer le sous-ensemble des couches distinctes de flux de données du canal physique.

12. Terminal mobile, conformément à la revendication 10 ou 11, **caractérisé par le fait que** le moyen de réception est adapté pour la réception de données du service de données variable via un canal de transport commun.

13. Terminal mobile, conformément à l'une des revendications 10 à 12, **caractérisé par le fait qu'**il comporte, en outre, un moyen de transmission pour transmettre, vers le réseau d'accès par radio, des indicateurs dérivés des résultats des mesures inter-fréquence.

14. Terminal mobile, conformément à l'une des revendications 10 à 13, **caractérisé par le fait que** le moyen de réception est adapté pour recevoir une instruction du réseau d'accès par radio, pour changer la fréquence porteuse pour des données du service de données variable, et
le moyen de transmission est adapté pour changer la fréquence porteuse, pour des données du service de données variable, vers la fréquence désignée.

15. Terminal mobile, conformément à l'une des revendications 10 à 14, **caractérisé par le fait qu'**il comporte un moyen de notification pour notifier une strate de non accès dans le réseau sans fil concernant le traitement du sous-ensemble des couches distinctes de flux de données.

16. Terminal mobile, conformément à l'une des revendications 10 à 15, **caractérisé par le fait que** le moyen de réception est adapté pour recevoir la notification via le canal de contrôle MBMS ou via un canal de contrôle de notification du réseau d'accès par radio, pour effectuer des mesures inter-fréquence.

17. Terminal mobile, conformément à l'une des revendications 10 à 16, **caractérisé par le fait que** le service de données variable est un service multimédia radio-diffusion/multi-diffusion MBMS.

18. Système de communication comportant au moins un terminal mobile, conformément à l'une des revendications 10 à 17, ainsi qu'un réseau d'accès par radio pour fournir une donnée de transmission d'un service de données variable vers le au moins un terminal mobile.
